(19) Europäisches Patentamt
European Patent Office
Office européen des brevets

(11) Publication number: **0 133 907**
**A1**

# (12) EUROPEAN PATENT APPLICATION

(21) Application number: 84107583.1

(22) Date of filing: 29.06.84

(51) Int. Cl.⁴: C 08 L 81/06

(30) Priority: 30.06.83 US 509603

(43) Date of publication of application: 13.03.85 Bulletin 85/11

(84) Designated Contracting States: AT BE CH DE FR GB IT LI LU NL SE

(71) Applicant: UNION CARBIDE CORPORATION, Old Ridgebury Road, Danbury Connecticut 06817 (US)

(72) Inventor: Robeson, Lloyd Mahlon, Route 1, Box 244, Whitehouse Station New Jersey 08889 (US)
Inventor: Harris, James Elmer, 211 Birchview Drive, Piscataway New Jersey 08854 (US)

(74) Representative: Weinhold, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)

## (54) Polyarylethersulfone containing blends.

(57) Described herein are molding compositions comprising a select polyarylethersulfone and a thermoplastic polymer selected from a polyarylate, a polyester, and a polycarbonate, or mixtures thereof. These compositions have a good balance of mechanical properties and improved environmental stress crack resistance.

EP 0 133 907 A1

0133907

## BACKGROUND OF THE INVENTION

This invention is directed to molding compositions comprising a select polyarylethersulfone and a thermoplastic polymer selected from a polyarylate, a polyester, and a polycarbonate, or mixtures thereof. These compositions have a good balance of mechanical properties.

Polyarylates, polyesters and polycarbonates are all high temperature, high performance thermoplastic polymers with a good combination of thermal and mechanical properties. All of these thermoplastic polymers have good processability which allows them to be molded into a variety of different articles. In many instances, these articles are in contact with a chemical environment.

The polyarylates, polyesters and polycarbonates have been blended with a variety of other thermoplastic polymers to improve one or more of their mechanical properties and also their chemical resistance.

However, there is a constant need to develop polymer systems that have maximum mechanical and thermal properties. Generally the physical properties of the blends are poorer than the constituent polymers of the blend. This is particularly true of the elongation at break and impact strength properties.

It has now been found that when a polyarylate, polyester or polycarbonate is blended with a select polyarylethersulfone, the blends have an excellent combination of mechanical properties as compared to the constituent values. Also, the addition of the polyarylethersulfone improves the environmental stress rupture resistance of these blends.

## DESCRIPTION OF THE INVENTION

The molding composition of this invention comprises a select polyarylethersulfone and a thermoplastic polymer selected from a polyarylate, a polyester and a polycarbonate, or mixtures thereof. The composition may also contain a filler and/or reinforcing agent.

The polyarylethersulfones of this invention are amorphous thermoplastic polymers containing units of the formula:

(I) 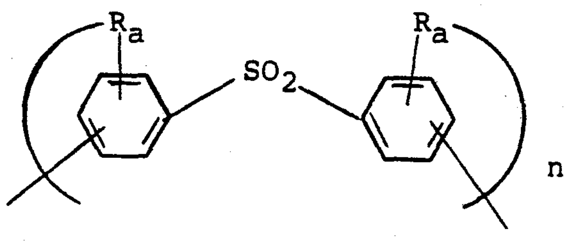 , and

(II) 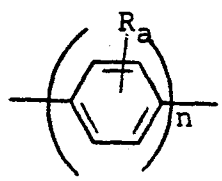

and/or

(III) 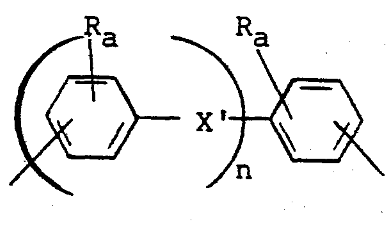

wherein R is independently hydrogen, $C_1$ to $C_6$ alkyl or $C_4$ to $C_8$ cycloalkyl, X' is independently

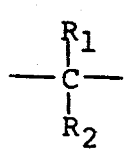

wherein $R_1$ and $R_2$ are independently hydrogen or $C_1$ to $C_9$ alkyl, or

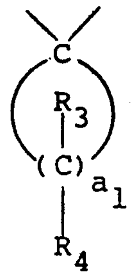

wherein $R_3$ and $R_4$ are independently hydrogen or $C_1$ to $C_8$ alkyl, and $a_1$ is an integer of 3 to 8; -S-, -O-, or 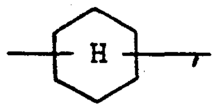 a is an integer of 0 to 4 and n is independently an integer of 1 to 3 and wherein the ratio of unit (I) to the sum of units (II) and/or (III) is greater than 1. The units are attached to each other by an -O- bond.

A preferred polymer of this invention contains units of the formula:

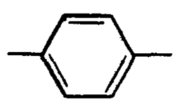

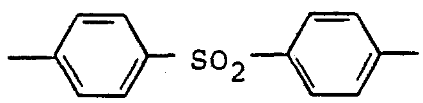 , and

Another preferred polyarylethersulfone of this invention contains units of the formula:

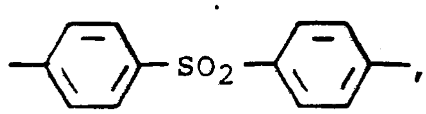 , and

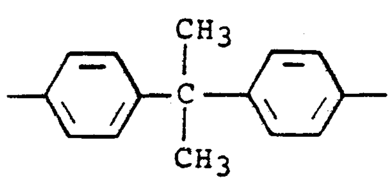

These units are attached to each other by an -O- bond.

The polyarylethersulfone may be random or may have an ordered structure.

The polyarylethersulfones of this invention have a reduced viscosity of from about 0.4 to greater than about 2.5, as measured in N-methylpyrrolidone, or other suitable solvent, at 25°C.

The polyarylethersulfones of this invention are prepared by reacting the monomers represented by the following formulae:

(IV) 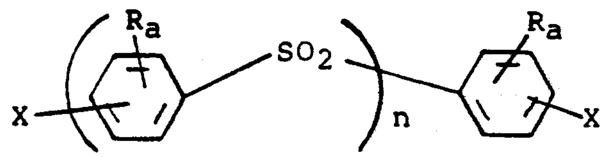

(V) 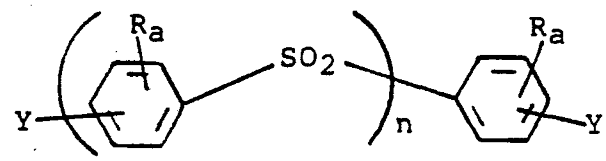

(VI) 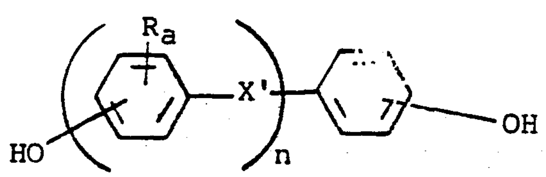

(VII) and/or 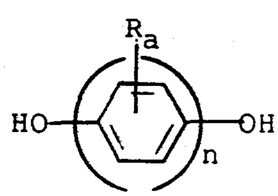

wherein R, a, X' and n are as previously defined, and X and Y are independently selected from Cl, Br, F, $NO_2$ or OH and at least 50 percent of the Y's are OH.

The ratio of the concentration of OH groups to Cl, Br, F and/or $NO_2$ groups used to form the polyarylethersulfone is from about 0.90 to about 1.10, preferably from about 0.98 to about 1.02.

The monomers, represented by formulas (IV), (V), (VI) and (VII), include the following:

2,2-bis(4-hydroxyphenyl)propane,
bis(4-hydroxyphenyl)methane,
4,4'-dihydroxydiphenyl sulfide,
4,4'-dihydroxydiphenyl ether,
4,4'-dihydroxydiphenyl sulfone,
2,4'-dihydroxydiphenyl sulfone,
4,4'-dichlorodiphenyl sulfone,
4,4'-dinitrodiphenyl sulfone,
4-chloro-4'-hydroxydiphenyl sulfone,
4,4'-biphenol, hydroquinone, and the like.

The preferred monomers include hydroquinone, 4,4-biphenol, 2,2-bis(4-hydroxyphenyl) propane, 4,4'-dichlorodiphenyl sulfone, and 4,4'-dihydroxydiphenyl sulfone or 4 chloro -4'-hydroxydiphenyl sulfone.

The polymers of this invention are prepared by contacting substantially equimolar amounts of the hydroxy containing compounds (depicted in formulas (IV) to (VII) _supra_) and halo and/or nitro containing compounds (depicted in formula (IV) and (V) supra) with from about 0.5 to about 1.0 mole of an alkali metal carbonate per mole of hydroxyl group

in a solvent mixture comprising a solvent which forms an azeotrope with water in order to maintain the reaction medium at substantially anhydrous conditions during the polymerization.

The temperature of the reaction mixture is kept at from about 120 to about 180°C, for about 1 to about 5 hours and then raised and kept at from about 200 to about 250°C, preferably from about 210 to about 230°C, for about 1 to 10 hours.

The reaction is carried out in an inert atmosphere, e.g., nitrogen, at atmospheric pressure, although higher or lower pressures may also be used.

The polyarylethersulfone is then recovered by conventional techniques such as coagulation, solvent evaporation, and the like.

The solvent mixture comprises a solvent which forms an azeotrope with water and a polar aprotic solvent. The solvent which forms an azeotrope with water includes an aromatic hydrocarbon such as benzene, toluene, xylene, ethylbenzene, chlorobenzene, and the like.

The polar aprotic solvents employed in this invention are those generally known in the art for the manufacture of polyarylether sulfones and include sulfur containing solvents such as those of the formula:

$$R_5 - S(O)_b - R_5$$

in which each $R_5$ represents a monovalent lower hydrocarbon group free of aliphatic unsaturation, which preferably contains less than about 8 carbon atoms or when connected together represents a divalent alkylene group with b being an integer from

1 to 2 inclusive. Thus, in all of these solvents all oxygens and two carbon atoms are bonded to the sulfur atom. Contemplated for use in this invention are such solvents as those having the formula:

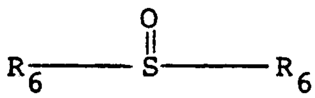 and 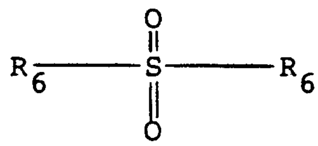

where the $R_6$ groups are independently lower alkyl, such as methyl, ethyl, propyl, butyl, and like groups, and aryl groups such as phenyl and alkylphenyl groups such as the tolyl group, as well as those where the $R_6$ groups are interconnected as in a divalent alkylene bridge such as:

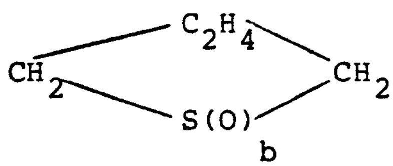

in tetrahydrothiophene oxides and dioxides. Specifically, these solvents include dimethylsulfoxide, dimethylsulfone, diphenylsulfone, diethylsulfoxide, diethylsulfone, diisopropylsulfone, tetrahydrothiophene 1,1-dioxide (commonly called tetramethylene sulfone or sulfolane) and tetrahydrothiophene-1 monoxide.

Additionally, nitrogen containing solvents may be used. These include dimethyl acetamide, dimethyl formamide and N-methylpyrrolidone.

The azeotrope forming solvent and polar aprotic solvent are used in a weight ratio of from about 10:1 to about 1:1, preferably from about 7:1 to about 5:1.

In the reaction, the hydroxy containing compound is slowly converted, *in situ*, to the alkali salt thereof by reacting with the alkali metal carbonate. The alkali metal carbonate is preferably potassium carbonate. Mixtures of carbonates such as potassium and sodium carbonate may also be used.

Water is continuously removed from the reaction mass as an azeotrope with the azeotrope forming solvent so that substantially anhydrous conditions are maintained during the polymerization.

It is essential that the reaction medium be maintained substantially anhydrous during the polycondensation. While amounts of water up to about one percent can be tolerated, and are somewhat beneficial when employed with fluorinated dihalobenzenoid compounds, amounts of water substantially greater than this are desirably avoided as the reaction of water with the halo and/or nitro compound leads to formation of phenolic species and only low molecular weight products are secured. Consequently, in order to secure the high polymers, the system should be substantially anhydrous, and preferably contain less than 0.5 percent by weight water during the reaction.

Preferably, after the desired molecular weight has been attained, the polymer is treated with an activated aromatic halide or an aliphatic halide such as methyl chloride or benzyl chloride, and the like. Such treatment of the polymer converts the terminal hydroxyl groups into ether groups which stabilize the polymer. The polymer so treated has good melt and oxidative stability.

The polyarylates which are suitable for use in this invention are derived from a dihydric phenol and at least one aromatic dicarboxylic acid and have a reduced viscosity of from about 0.4 to greater than about 1.0, preferably from about 0.6 to about 0.8 dl/gm, as measured in chloroform (0.5 g/100ml chloroform) or other suitable solvent at 25°C.

A particularly desirable dihydric phenol is of the following formula:

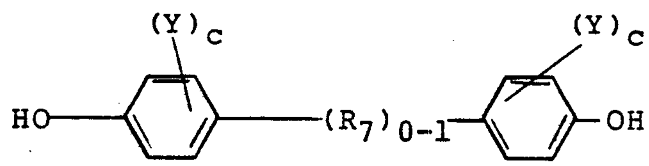

wherein Y is independently selected from, hydrogen, alkyl groups of 1 to 4 carbon atoms, chlorine or bromine, each c, independently, has a value of from 0 to 4, inclusive, and $R_7$ is a divalent saturated or unsaturated aliphatic hydrocarbon radical, particularly an alkylene or alkylidene radical having from 1 to 6 carbon atoms, or a cycloalkylidene or cycloalkylene radicals having up to and including 9 carbon atoms, O, CO, $SO_2$, or S. The dihydric phenols may be used individually or in combination.

The dihydric phenols that may be used in this invention include the following:

2,2-bis-4(4-hydroxyphenyl)propane;

bis-(2-hydroxyphenyl)methane,

bis-(4-hydroxyphenyl)methane,

bis-(4-hydroxy-2,6-dimethyl-3-methoxyphenyl) methane,

1,1-bis-(4-hydroxyphenyl)ethane,
1,2-bis-(4-hydroxyphenyl)ethane,
1,1-bis-(4-hydroxy-2-chlorophenyl)ethane,
1,3-bis-(3-methyl-4-hydroxyphenyl)ethane,
1,3-bis-(3-methyl-4-hydroxyphenyl)propane,
2,2-bis-(3-phenyl-4-hydroxyphenyl)propane,
2,2-bis-(3-isopropyl-4-hydroxyphenyl)propane,
2,2-bis-(2-isopropyl-4-hydroxyphenyl)propane,
2,2-bis-(4-hydroxyphenyl)pentane,
3,3-bis-(4-hydroxyphenyl)pentane,
2,2-bis-(4-hydroxyphenyl)heptane,
1,2-bis-(4-hydroxyphenyl)1,2-bis-(phenyl)-propane,
4,4'-(dihydroxyphenyl)ether,
4,4'-(dihydroxyphenyl)sulfide,
4,4'-(dihydroxyphenyl)sulfone,
4,4'-(dihydroxyphenyl)sulfoxide,
4,4'-(dihydroxybenzophenone), and
naphthalene diols

The aromatic dicarboxylic acids that may be used in this invention include terephthalic acid, isophthalic acid, any of the naphthalene dicarboxylic acids and mixtures thereof, as well as alkyl substituted homologs of these carboxylic acids, wherein the alkyl group contains from 1 to about 4 carbon atoms, and acids containing other inert substituents, such as halides, alkyl or aryl ethers, and the like. Acetoxybenzoic acid can also be used. Preferably, mixtures of isophthalic and terephthalic acids are used. The isophthalic acid

to terephthalic acid ratio in the mixture is about 0:100 to about 100:0, while the most preferred acid ratio is about 75:25 to about 50:50. Also, from about 0.5 to about 20 percent of aliphatic diacids containing from 2 to about 10 carbon atoms, such as adipic acid, sebacic acid, and the like may be additionally used in the polymerization reaction.

The polyarylates of the present invention can be prepared by any of the well known prior art polyester forming reactions, such as the reaction of the acid chlorides of the aromatic dicarboxylic acids with the dihydric phenols; the reaction of the diaryl esters of the aromatic dicarboxylic acids with the dihydric phenols; or the reaction of the aromatic diacids with diester derivatives of the dihydric phenol. These processes are described in, for example, U.S. Patents 3,317,464; 3,948,856; 3,780,148; 3,824,213; and 3,133,898.

The polyarylates are preferably prepared by the process as set forth in U.S. Patent 4,321,355. This process comprises the following steps:

(a) reacting an acid anhydride derived from an acid containing from 2 to 8 carbon atoms with at least one dihydric phenol to form the corresponding diester; and

(b) reacting said diester with at least one aromatic dicarboxylic acid at a temperature sufficient to form the polyarylate, wherein the improvement comprises removing residual acid anhydride after formation of the dihydric phenol diester so that its concentration is less than about 1500 parts per million.

The acid anhydride suitable is derived from an acid containing from 2 to 8 carbon atoms. The preferred acid anhydride is acetic anhydride.

The dihydric phenol is described above.

Generally, the dihydric phenol reacts with the acid anhydride under conventional esterification conditions to form the dihydric phenol diester. The reaction may take place in the presence or absence of a solvent. Additionally, the reaction may be conducted in the presence of a conventional esterification catalyst or in the absence thereof.

The polyesters which are suitable for use herein are derived from an aliphatic or cycloaliphatic diol, or mixtures thereof, containing from 2 to about 10 carbon atoms and at least one aromatic dicarboxylic acid. The polyesters which are derived from an aliphatic diol and an aromatic dicarboxylic acid have repeating units of the following general formula:

(VIII) 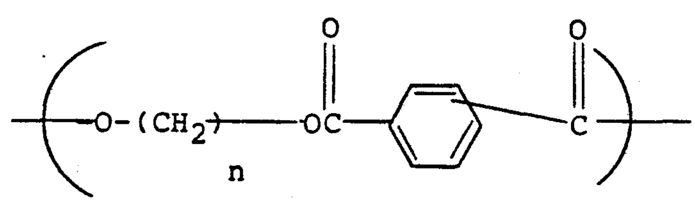

wherein n is an integer of from 2 to 10.

The preferred polyester is poly(ethylene terephthalate).

Also contemplated herein are the above polyesters with minor amounts, e.g., from 0.5 to about 2 percent by weight, of units derived from aliphatic acids and/or aliphatic polyols, to form

copolyesters. The aliphatic polyols include glycols, such as poly(ethylene glycol). These can be made following the teachings of, for example, U.S. Patents 2,465,319 and 3,047,539.

The polyesters which are derived from a cycloaliphatic diol and an aromatic dicarboxylic acid are prepared by condensing either the cis - or trans-isomer (or mixtures thereof) of, for example, 1,4-cyclohexanedimethanol with an aromatic dicarboxylic acid so as to produce a polyester having recurring units of the following formula:

(IX) 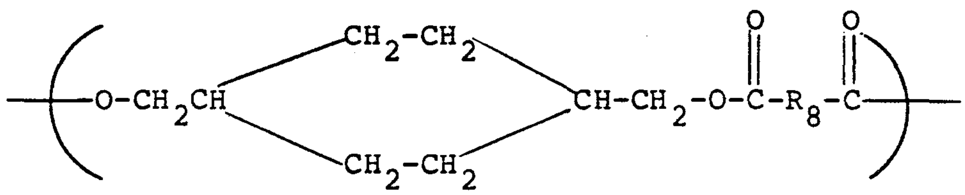

wherein the cyclohexane ring is selected from the cis- and trans- isomers thereof and $R_8$ represents an aryl radical containing 6 to 20 carbon atoms and which is the decarboxylated residue derived from an aromatic dicarboxylic acid.

Examples of aromatic dicarboxylic acids indicated by $R_8$ in formula IX, are isophthalic or terephthalic acid, 1,2-di(p-carboxyphenyl)ethane, 4,4'-dicarboxydiphenyl ether, etc., and mixtures of these. All of these acids contain at least one aromatic nucleus. Fused rings can also be present, such as in 1,4-or 1,5-naphthalenedicarboxylic acids. The preferred dicarboxylic acids are terephthalic acid or a mixture of terephthalic and isophthalic acids.

A preferred polyester may be derived from the reaction of either the cis-or trans-isomer (or a mixture thereof) of 1,4-cyclohexanedimethanol with a mixture of isophthalic and terephthalic acids. These polyesters have repeating units of the formula:

(X) 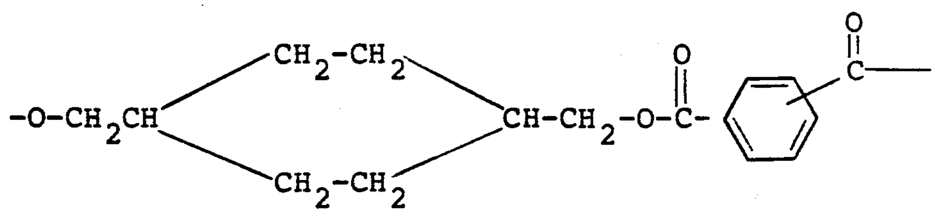

Another preferred polyester is a copolyester derived from a cyclohexane dimethanol, an alkylene glycol and an aromatic dicarboxylic acid. These copolyesters are prepared by condensing either the cis- or trans-isomer (or mixtures thereof) of, for example, 1,4-cyclohexanedimethanol and an alkylene glycol with an aromatic dicarboxylic acid so as to produce a copolyester having repeating units of the following formula:

(XI) 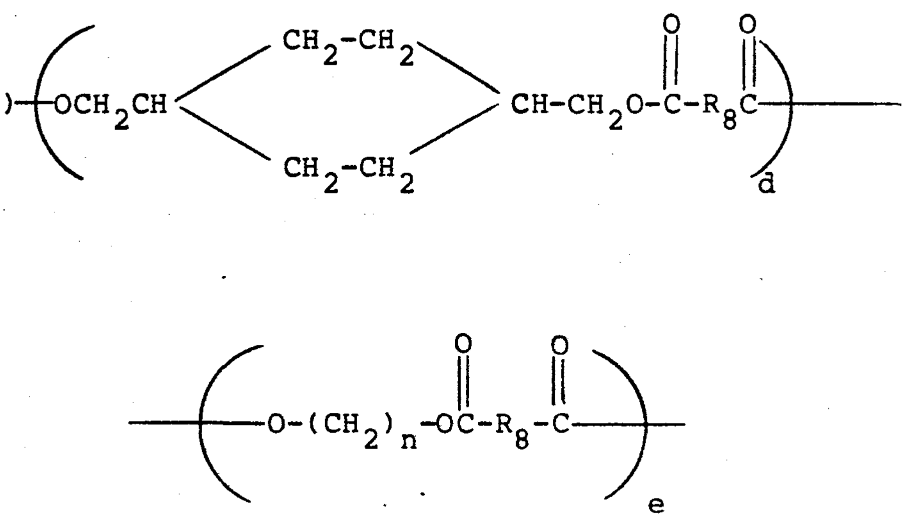

wherein the cyclohexane ring is selected from the cis- and trans- isomers thereof, $R_8$ is as previously defined, n is an integer of 2 to 10, the d units comprise from about 10 to about 90 percent by weight and the e units comprise from about 10 to about 90 percent by weight.

The preferred copolyester may be derived from the reaction of either the cis- or trans-isomer (or mixtures thereof) of 1,4-cyclohexanedimethanol and ethylene glycol with terephthalic acid in a molar ratio of 1:2:3. These copolyesters have repeating units of the following formula:

(XII)

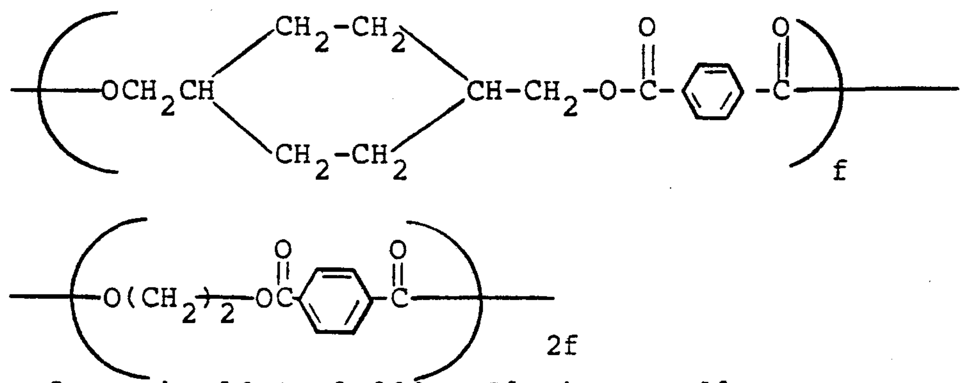

wherein f can be 10 to 1,000. Block as well as random copolymers are possible.

The polyester as described herein are either commercially available or can be produced by methods well known in the art, such as those set forth in, for example, U.S. Patent 2,901,466.

The polyesters used herein have an intrinsic viscosity of from about 0.4 to about 2.0 dl/g. as measured in a 60:40 phenol/tetrachloroethane mixture or similar solvent at 23 to 30°C.

The thermoplastic aromatic polycarbonates that can be employed herein are homopolymers and copolymers and mixtures thereof, which have an intrinsic viscosity of from about 0.4 to about 1.0 dl./g. as measured in methylene chloride at 25°C. The polycarbonates are prepared by reacting a dihydric phenol with a carbonate precursor. Typical of some of the dihydric phenols that may be employed are bisphenol-A, bis(4-hydroxyphenyl)methane, 2,2-bis(4-hydroxy-3-methylphenyl)propane, 4,4-bis(4-hydroxyphenyl)heptane, 2-2-(3,5,3',5'tetrabromo-4,4'-dihydroxydiphenyl)propane, (3,3'dichloro-4,4'dihydroxydiphenyl)methane, and the like. Other dihydric phenols of the bisphenol type are described in, for example, U.S. Patents, 2,999,835, 3,028,365 and 3,334,154.

It is, of course, possible to employ two or more different dihydric phenols or a copolymer of a dihydric phenol with a glycol or with hydroxy or acid terminated polyesters.

The carbonate precursor may be either a carbonyl halide, a carbonate ester, or a haloformate. The carbonyl halides which can be employed herein are carbonyl bromide, carbonyl chloride and mixtures thereof. Typical of the carbonate esters which may be employed herein are diphenyl carbonate, di-(halophenyl)carbonates, such as di-(chlorophenyl)carbonate or di-(bromophenyl)carbonate, etc., di-(alkylphenyl)carbonates such as di(tolyl)carbonate, di(naphthyl)carbonate,

di(chloronaphthyl)carbonate, etc. or mixtures thereof. The haloformates suitable for use herein include bis-haloformate of dihydric phenols for example, bischloroformates of bisphenol-A, of hydroquinone, etc. or glycols for example, bishaloformates of ethylene glycol, neopentyl glycol, polyethylene glycol, etc. While other carbonate precursors will be apparent to those skilled in the art, carbonyl chloride, also known as phosgene, is preferred.

The aromatic polycarbonate polymers may be prepared by methods well known in the art by using phosgene or a haloformate and by employing a molecular weight regulator, an acid acceptor and a catalyst. The molecular weight regulators which can be employed in carrying out the process include monohydric phenols, such as phenol, para-tertiary-butylphenol, para-bromophenol, primary and secondary amines, etc. Preferably, a phenol is employed as the molecular weight regulator.

A suitable acid acceptor may be either an organic or an inorganic acid acceptor. A suitable organic acid acceptor is a tertiary amine and includes materials, such as pyridine, triethylamine, dimethylaniline, tributylamine, etc. The inorganic acid acceptor may be one which can be either a hydroxide, a carbonate, a bicarbonate, or a phosphate of an alkali or alkaline earth metal.

The catalysts which are employed herein can be any of the suitable catalysts that aid the polymerization of, for example, bisphenol-A with phosgene. Suitable catalysts include tertiary

amines, such as triethylamine, tripropylamine, N,N-dimethylaniline, quaternary ammonium compounds, such as tetraethylammonium bromide, cetyl triethyl ammonium bromide, tetra-n-heptylammonium iodide, and quaternary phosphonium compounds, such as n-butyltriphenyl-phosphonium bromide and methyl-triphenyl phosphonium bromide.

The polycarbonates can be prepared in a one-phase (homogeneous solution) or a two-phase (interfacial) systems when phosgene, or a haloformate are used. Bulk reactions are possible when the diarylcarbonate precursors are used.

Also, aromatic polyester carbonates may be used. These are described in, for example, U.S. Patent 3,169,121. The preferred polyester carbonate results from the condensation of phosgene, terephthaloyl chloride, isophthaloyl chloride with bisphenol-A and a small amount of p-tertbutylphenol.

The composition of this invention contains from about 5 to about 95, preferably from about 15 to about 85 weight percent of the polyarylethersulfone and from about 5 to about 95, preferably from about 15 to about 85 weight percent of the thermoplastic polymer.

The compositions of this invention are prepared by conventional mixing methods. For example, the polyarylethersulfone is mixed with the thermoplastic polymer and other optional ingredients in powder or granular form in an extruder and extruding the mixture into strands, chopping the strands into pellets and molding the pellets into the desired article.

The composition of this invention may include mineral fillers such as carbonates including chalk, calcite and dolomite; silicates including mica, talc, wollastonite; silicon dioxide; glass spheres; glass powders; aluminum; clay; quartz; and the like. Also, reinforcing fibers such as fiberglass, carbon fibers, and the like may be used. The composition may also include additives such as titanium dioxide; thermal stabilizers such as zinc oxide; ultraviolet light stabilizers, plasticizers, and the like. Other thermoplastic polymers such as polysulfones may be included.

The mineral fillers and/or reinforcing fibers may be used in amounts of up to about 30, preferably up to about 25 weight percent.

## EXAMPLES

The following examples serve to give specific illustrations of the practice of this invention but they are not intended in any way to limit the scope of this invention.

The following designations used in the Examples have the following meaning:

Polyarylethersulfone: A polymer having the following repeating unit:

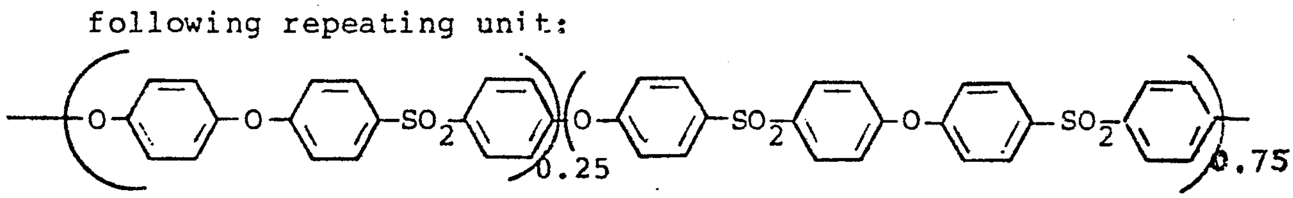

The polymer has a reduced viscosity of 0.61 dl/g as measured in N-methyl-pyrrolidinone (0.2 g/100 ml) at 25°C.

## EXAMPLE 1

25 weight percent of polyarylethersulfone was blended with 75 weight percent of an aromatic

bisphenol-A polycarbonate (Lexan 101 obtained from General Electric Co.) having a reduced viscosity of 0.64 as measured in chloroform at 25°C.

This blend was prepared by extrusion blending the components at about 275°C in a single screw 1-inch diameter extruder with L/D=36/1. The extrudate was chopped into pellets. The pelletized product was then injection molded into ASTM test specimens (at 270°-300°C) using a Newbury 1 1/4 ounce screw injection molding machine. The test specimens were measured for the following properties: tensile strength and modulus according to ASTM D-638; elongation at break according to ASTM D-638; notched izod impact strength according to ASTM D-256; tensile impact strength according to ASTM D-1822; heat distortion temperature measured at 264 psi on a 1/8 inch thick unannealed test bar according to ASTM D-635,

The results are shown in Table I along with the properties of Controls A to C.

EXAMPLE 2

50 weight percent of polyarylethersulfone was blended with 50 weight percent of the polycarbonate described in Example 1. The blend was prepared and tested as described in Example 1. The results are shown in Table 1.

EXAMPLE 3

75 weight percent of polyarylethersulfone was blended with 25 weight percent of the polycarbonate described in Example 1. The blend was prepared and tested as described in Example 1. The results are shown in Table 1.

EXAMPLE 4

25 weight percent of polyarylethersulfone was blended with 75 weight percent of a polyarylate (Ardel D-100, sold by Union Carbide Corporation and prepared from, Bisphenol-A and a mixture of 50 mole percent each of terephthalic and isophthalic acid chlorides, by conventional methods) having a reduced viscosity of 0.66 as measured by p-chlorophenol at 49°C (0.2g/100 ml).

The blend was prepared and tested as described in Example 1.

The results are shown in Table I.

EXAMPLE 5

50 weight percent of polyarylethersulfone was blended with 50 weight percent of the polyarylate described in Example 4. The blend was prepared and tested as described in Example 1. The results are shown in Table 1.

EXAMPLE 6

75 weight percent of polyarylethersulfone was blended with 25 weight percent of the polyarylate described in Example 4. The blend was prepared and tested as described in Example 1. The results are shown in Table 1.

TABLE 1

| Example | Description of the Composition: Polymer[1] | Description of the Composition: (wt.%) | Tensile Modulus (psi) | Tensile Strength (psi) | Elongation (percent) | Notched Izod Impact Strength (ft-lbs/in of notch) | Tensile Impact Strength (ft-lbs./in$^2$) | Heat Distortion Temp(°C) |
|---|---|---|---|---|---|---|---|---|
| Control A | PES | 100 | 385,000 | 12,000 | 40 | 1.6 | 160 | 198 |
| Control B | PC | 100 | 325,000 | 9,100 | 90 | 18.0 | 230 | 128 |
| Control C | PA | 100 | 300,000 | 10,000 | 65 | 4.2 | 132 | 170 |
| 1 | PES<br>PC | 25<br>75 | 365,000 | 10,300 | 123 | 19.8 | 193 | 137 |
| 2 | PES<br>PC | 50<br>50 | 373,000 | 10,300 | 90 | 2.3 | 203 | 144 |
| 3 | PES<br>PC | 75<br>25 | 392,000 | 11,300 | 108 | 1.7 | 175 | 181 |
| 4 | PES<br>PA | 25<br>75 | 324,000 | 10,300 | 33 | 4.6 | 137 | 173 |
| 5 | PES<br>PA | 50<br>50 | 354,000 | 10,700 | 50 | 2.9 | 168 | 182 |
| 6 | PES<br>PA | 75<br>25 | 389,000 | 11,600 | 58 | 1.7 | 126 | 190 |

PES = polyarylethersulfone
PC = polycarbonate
PA = polyarylate

EXAMPLE 7

A blend of 41 weight percent of the polyarylethersulfone, 24 weight percent of a polyethylene terephthalate (Cleartuf 1002A obtained from Goodyear) with an intrinsic viscosity of 1.04 dl/g, as measured in 60:40 phenol/tetrachloroethane mixture at 23°C, 7 weight percent of the polycarbonate as described in Example 1, 6 weight percent of decabromodiphenyl oxide, and 22 weight percent of fiberglass (OCF-197B obtained from Owens-Corning Corp.) was prepared in a laboratory extruder at 275-285°C. The blend had the following properties:

| | |
|---|---|
| Tensile Modulus | 1,010,000 psi |
| Tensile Strength | 12,900 psi |
| Elongation | 1.5% |
| Notched Izod Impact Strength | 1.0 ft.lbs./in. of notch |
| Tensile Impact Strength | 29 ft.lbs./$in^2$ |

EXAMPLE 8

32 weight percent of polyarylethersulfone was blended with 15 weight percent of a polysulfone (Udel P3703, sold by Union Carbide Corp. and prepared from sodium bisphenate-A and 4,4'-dichlorodiphenyl sulfone by conventional methods) having a reduced viscosity of 0.45 as measured in chloroform at 25°C (0.2 g/100 ml), 24 weight percent of the polyethylene terephthalate described in Example 7, 7 weight percent of the bisphenol-A polycarbonate described in Example 1, and 22 percent fiber glass (OCF497B obtained from Owens-Corning Corp.).

The blend was prepared and tested as described in Example 1.

The results are listed below.

| | |
|---|---|
| Tensile Modulus | 993,000 psi |
| Tensile Strength | 14,900 psi |
| Elongation | 2.1% |
| Notched Izod Impact Strength | 1.2 ft.lbs./in. of notch |
| Tensile Impact Strength | 31 ft.lbs./$in^2$ |

EXAMPLE 9

Compression moldings (4 x 4 x 0.020 inches) of the samples described in examples 1 to 6 and the control polycarbonate and polyarylate samples used in the respective blends were made for environmental stress rupture testing. 1/8 inch strips were shear cut from the molded samples. These strips were placed between grips and loaded to a specific stress level. A cotton swab saturated with the chemical environment tested was attached to the center of the test specimen. The time for the specimen to rupture was determined. The results of these tests are given in Table II for environments of 50/50 (by volume) toluene/heptane and toluene.

Table II

| Example | Description of the Composition | | Stress | Time to Rupture (seconds) | |
|---|---|---|---|---|---|
| | Polymer | Wt% | (psi) | Toluene/Heptane 50/50 by volume | Toluene |
| Control A | PC | 100 | 1000 | 8 | 56 |
| Control B | PA | 100 | 1000 | 234 | 2 |
| 1 | PES<br>PC | 25<br>75 | 1000 | 72 | 306 |
| 2 | PES<br>PC | 50<br>50 | 1000 | 3025 | 612 |
| 3 | PES<br>PC | 75<br>25 | 1000 | 24 hours NCNB | 1,764 |
| 4 | PES<br>PA | 25<br>75 | 1000 | 761 | 21 |
| 5 | PES<br>PA | 50<br>50 | 1000 | 10,400 | 235 |
| 6 | PES<br>PA | 75<br>25 | 1000 | 24 hours NCNB | 665 |

NCNB = not crazed, not brittle

0133907

CLAIMS:

1. A molding composition comprising:

(a) a polyarylethersulfone containing units of the following formula:

(I) 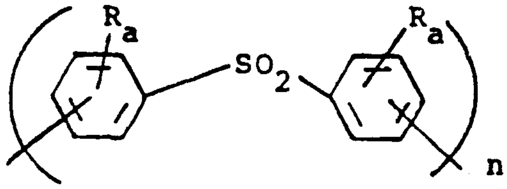 , and

(II) 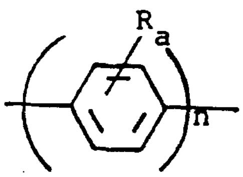

and/or

(III) 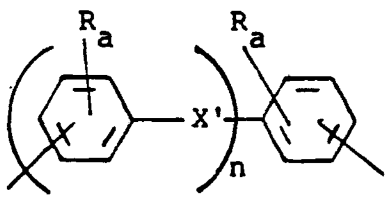

wherein R is independently hydrogen, $C_1$ to $C_6$ alkyl or $C_4$ to $C_8$ cycloalkyl, X' is independently

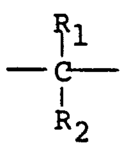

wherein $R_1$ and $R_2$ are independently hydrogen or $C_1$ to $C_9$ alkyl, or

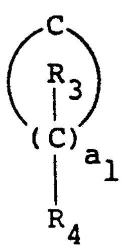

wherein $R_3$ and $R_4$ are independently hydrogen or $C_1$ to $C_8$ alkyl, and $a_1$ is an integer of 3 to 8; -S-, -O-, or 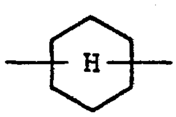, a is an integer of 0 to 4

and n is independently an integer of 1 to 3 and wherein the ratio of unit (I) to the sum of units (II) and/or (III) is greater than 1, wherein the units are attached to each other by an -0- bond, and

(b) a thermoplastic polymer selected from a polyarylate, a polyester, and a polycarbonate or mixtures thereof.

2. A molding composition as defined in claim 1 wherein in the polyarylethersulfone, unit (I) has the formula:

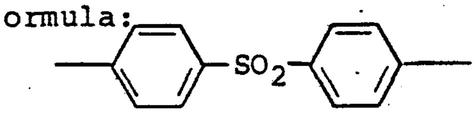

3. A molding composition as defined in any of claims 1-2, wherein in the polyarylethersulfone, unit (II) has the formula:

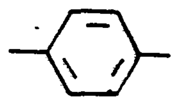

, or

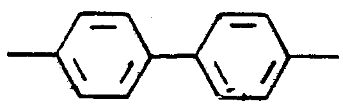

4. A molding composition as defined in one or more of the claims 1-3, wherein in the polyarylethersulfone, unit (III) has the formula:

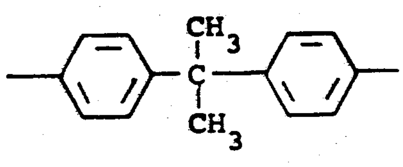

5. A molding composition as defined in claim 1, wherein the polyarylethersulfone contains recurring units of the formula:

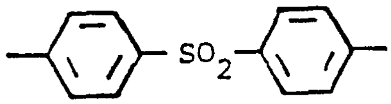 , and

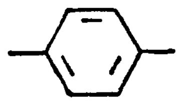 , or 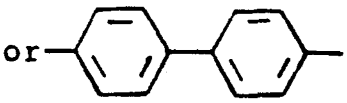

said units being attached to each other or by an -O- bond.

6. A molding composition as defined in claim 1, wherein the polyarylethersulfone contains recurring units of the formula:

(I) 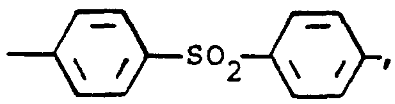, and

(II) 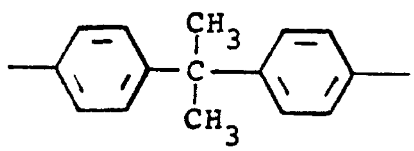

7. A molding composition as defined in one or more of the claims 1-6 wherein the thermoplastic polymer is a polyarylate, preferably derived from a dihydric phenol and at least one aromatic dicarboxylic acid.

8. A molding composition as defined in claim 7 wherein the dihydric phenol is of the following formula:

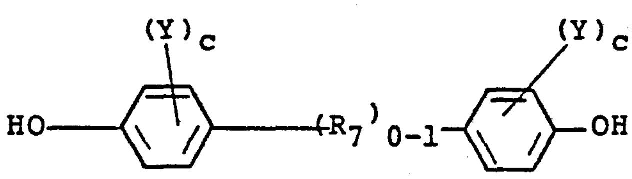

wherein Y is independently selected from, hydrogen, alkyl groups of 1 to 4 carbon atoms, chlorine or bromine, each c, independently, has a value of from 0 to 4, inclusive, and $R_7$ is a divalent saturated or unsaturated aliphatic hydrocarbon radical, particularly an alkylene or alkylidene radical having from 1 to 6 carbon atoms, or a

 0133907

cycloalkylidene or cycloalkylene radical having up to and including 9 carbon atoms, 0, CO, $SO_2$, or S.

9. A molding composition as defined in one or more of claims 7-8 wherein the aromatic dicarboxylic acid is terephthalic acid, isophthalic acid, any of the naphthalene dicarboxylic acids and mixtures thereof, as well as alkyl substituted homologs of these carboxylic acids, wherein the alkyl group contains form 1 to about 4 carbon atoms, and acids containing other inert substituents, such as halides, alkyl or aryl ethers.

10. A molding composition as defined in one or more of the claims 7-9 wherein the polyarylate is derived from bisphenol A and terephthalic acid or isophthalic acid, or mixtures thereof.

11. A molding composition as defined in one or more of the claims 1-6 therein the thermoplastic polymer is a polyester, e.g. any one which has repeating units of the general formula:

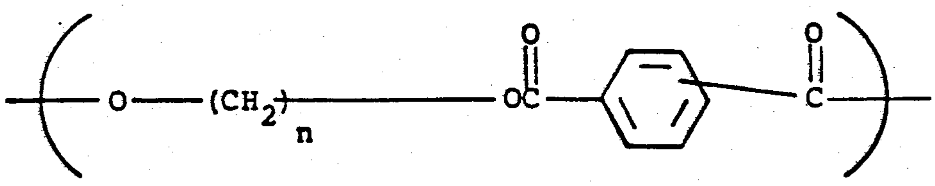

wherein n is an integer of from 2 to 10, e.g. poly(ethylene terephthalate).

12. A molding composition as defined in one or more of claims 1-6 wherein the thermoplastic polymer is an aromatic polycarbonate, e.g. a poly (estercarbonate) or the reaction product of a dihydric phenol and a carbonate precursor.

0133907

13. A molding composition as defined in claim 12 wherein the dihydric phenol is bisphenol-A and the carbonate precursor is carbonyl chloride.

14. A molding composition as defined in one or more of the claims 1-13 which contains a polysulfone different from the polyarylethersulfone, e.g. any one which has the repeating units of the following formula:

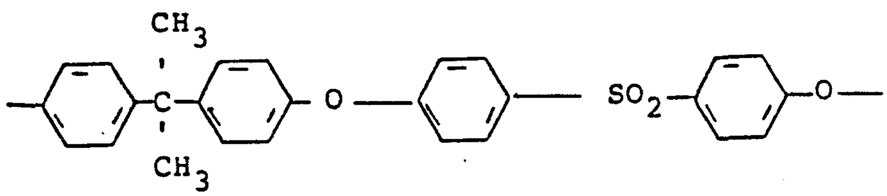

15. A molding composition as defined in one or more of the claims 1-14 which contains a mineral filler, e.g. selected from calcium carbonate, wollastonite, mica, talc, silicon dioxide, glass spheres, glass powders, clay or quartz.

16. A molding composition as defined in one or more of the claims 1-15 which contains a reinforcing filler, e.g. fiberglass.

European Patent Office

# EUROPEAN SEARCH REPORT

0133907 Application number

EP 84 10 7583

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP-A-0 047 999 (UNION CARBIDE CORP.)<br>* Claims; example 1 * | 1-3,5 | C 08 L 81/06 |
| P,A | EP-A-0 097 370 (UNION CARBIDE CORP.)<br>* Claims 1-8 * | 1-3,5, 6,14, 16 | |
| A | EP-A-0 044 177 (CELANESE CORP.)<br>* Claims 1, 4, 5, 8, 13, 14, 18 * | 1,2,6-9,10, 15,16 | |
| A | EP-A-0 036 959 (UNION CARBIDE CORP.)<br>* Claims 1-5, 7 * | 1,2,6, 11,15 | TECHNICAL FIELDS SEARCHED (Int. Cl. 3) |
| A | EP-A-0 000 733 (BAYER AG)<br>* Abstract; example 1; page 3, lines 5-18; page 4 * | 1,2,6, 12,13 | C 08 G 75/00<br>C 08 L 81/06 |
| A | EP-A-0 048 493 (UNION CARBIDE CORP.)<br>* Claims 14, 15; example 1 * & US-A- 4 321 355 (Cat. D,A) | 7-10 | |

The present search report has been drawn up for all claims

| Place of search | Date of completion of the search | Examiner |
|---|---|---|
| BERLIN | 26-09-1984 | HASS C V F |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document